# EUROPEAN PATENT APPLICATION

(11) **EP 0 945 711 A1**
(43) Date of publication of application: **29.09.1999**
(21) Application number: 98830171.9
(22) Date of filing: 23.03.1998
(51) Int. Cl.: G01F 1/00, G01F 15/075, G01F 15/06

(54) **System for recording consumption of a fluid**

(71) Applicant: Tekno & Logic S.r.l., 70021 Acquaviva delle Fonti (IT)
(72) Inventor: Serrone, Nicola, 70021 Acquaviva delle Fonti (IT); Girardi, Francesco, 70021 Acquaviva delle Fonti (IT); Radogna, Gianluca, 70021 Acquaviva delle Fonti (IT); Toritto, Giuseppe, 70010 Adelfia (IT)
(74) Representative: Cerbaro, Elena, Dr.

(57) **Abstract**

The recording system (1) has a measuring device (10) for measuring consumption of the fluid and in turn having a seat (24) for passage of the fluid, and a fluid-intercepting rotor (26) activated by passage of the fluid and housed inside the seat (24) so as to rotate about an axis (A); a transducer device (40) connected to the measuring device (10) to convert rotation of the intercepting rotor (26) into an electric consumption signal; and a device (4, 6) for acquiring the consumption signals.

## Description

The present invention relates to a system for recording consumption of a fluid.

In particular, the present invention may be used to advantage, though not exclusively, for recording domestic consumption of water and gas, to which the following description refers purely by way of example. The system according to the present invention, in fact, may be used, with no alterations required, for recording the consumption of any not excessively viscous fluid.

As is known, currently used systems for recording domestic consumption of water and gas feature mechanical meters installed in each home, and which are read periodically by a meter reader from the water or gas board.

More specifically, when the meter is read, the reader makes a handwritten note of the reading, normally on paper.

The handwritten readings recorded on paper are later transferred, normally by hand using a keyboard, to a centralized data acquisition system for storage and subsequent processing.

When recording the readings on paper or transferring the readings to the data acquisition system, mistakes may be made resulting, for example, in the storage of a higher than actual consumption figure, so that the user is billed for a considerably higher amount and is faced with a good deal of inconvenience and red tape to get the error corrected by the water or gas board.

It is an object of the present invention to provide a straightforward, low-cost system for recording the consumption of a fluid, and which provides for automatically recording meter readings to eliminate any possibility of error.

Advantageously, the recording system according to the present invention must also be capable of remote recording the consumption of said fluid.

According to the present invention, there is provided a system for recording consumption of a fluid, as described in Claim 1.

A preferred, non-limiting embodiment of the present invention will be described by way of example with reference to the accompanying drawings, in which:
Figure 1 shows a block diagram of a first embodiment of the recording system according to the present invention;
Figure 2 shows a block diagram of a second embodiment of the recording system according to the present invention;
Figure 3 shows a first embodiment of a fluid consumption measuring device forming part of the recording system according to the present invention;
Figures 4 and 5 show a second embodiment of the fluid consumption measuring device.

In the following description, the recording system according to the present invention is described with reference to the domestic consumption of water in a single home, it being understood, however, that an identical recording system to the one described may also be used for recording domestic consumption of gas.

The principle on which the present invention is based also applies to the recording of water and gas consumption by multiple users, e.g. in condominiums. In which case, each user is simply provided with a system for recording gas consumption, and one for recording water consumption.

In the event the water consumption of a condominium is recorded for the building as a whole, as opposed to each individual user, the condominium need simply be equipped with one water consumption recording system, and each user with an individual gas consumption recording system.

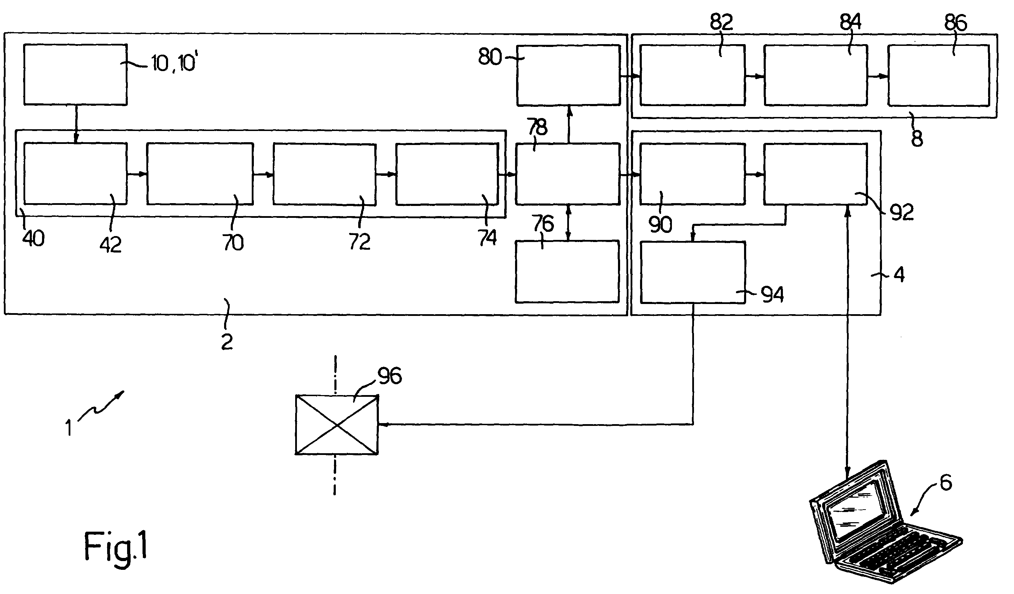

Figure 1 shows a block diagram of a first embodiment of the recording system according to the present invention.

As shown in Figure 1, the recording system, indicated as a whole by 1, comprises a water consumption measuring module 2; an interface module 4 connected to measuring module 2 to make the measured consumption data available externally; a portable data acquisition unit 6 issued to the meter reader and connectable to interface module 4 to acquire and store consumption data; and a display module 8 connected to measuring module 2 to display consumption data to the user and meter reader.

Measuring module 2 comprises a water consumption measuring device 10 derived from the one normally installed in each home and commonly referred to as a "water meter".

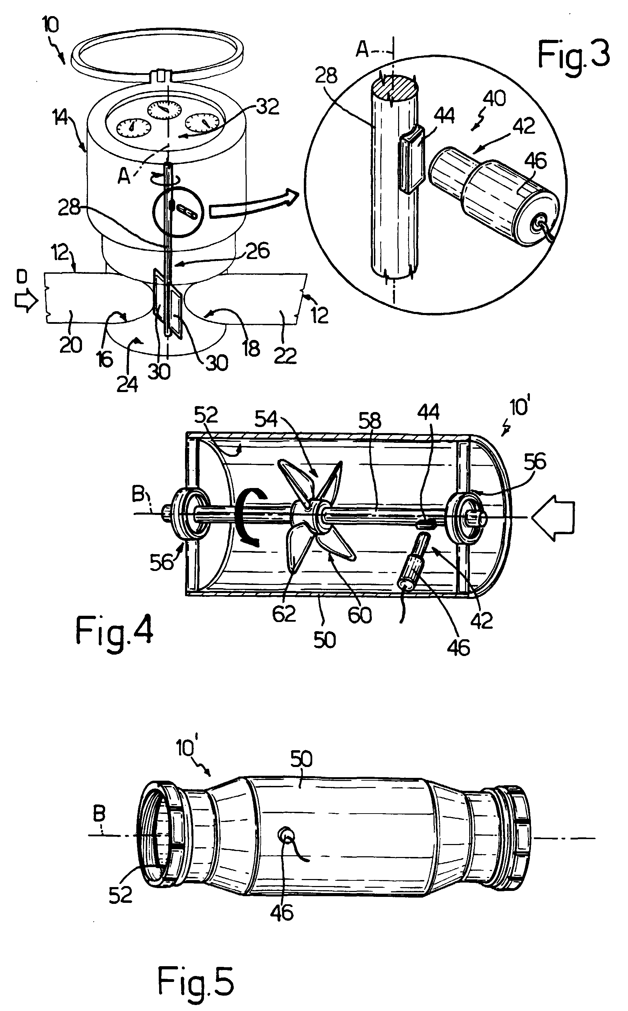

Measuring device 10 is shown in detail in Figure 3, and is formed by altering a typical water meter as described below.

As shown in Figure 3, measuring device 10 is located along a supply pipe 12 supplying water to the home in which measuring module 2 is installed, and comprises a fluidtight casing 14 having a water inlet 16 and a water outlet 18 connected to respective inlet and outlet portions 20, 22 of supply pipe 12, and which defines internally a seat 24 through which water flows from inlet 16 to outlet 18.

Measuring device 10 also comprises a water-intercepting rotor 26 housed inside seat 24, interposed between inlet 16 and outlet 18, and activated by the water flowing from inlet 16 to outlet 18.

More specifically, rotor 26 substantially comprises a shaft 28 fitted to the casing so as to rotate about an axis A perpendicular to the water flow direction D, and fitted integrally with a number of blades 30 extending radially with respect to axis A.

Measuring device 10 also comprises a mechanical consumption indicator 32 having one or more pointers activated by shaft 28 via known gears (not shown) not described in detail.

As shown in Figure 1, measuring module 2 also comprises a transducer device 40 connected to measuring device 10 to convert the rotation of shaft 28 of rotor 26 into a consumption signal indicating the amount of water consumed.

More specifically, transducer device 40 comprises a magnetic sensor assembly 42 connected to rotor 26 to generate a speed signal correlated to the rotation speed of the shaft and, hence, to the amount of water consumed.

Sensor assembly 42 is shown in detail in Figure 3.

As shown in Figure 3, sensor assembly 42 comprises a magnetic element 44 integral with shaft 28; and an electromagnetic sensor 46 fitted to casing 14, associated with magnetic element 44, and cooperating with magnetic element 44 to generate said speed signal at a respective output.

More specifically, the speed signal generated by electromagnetic sensor 46 is a pulse signal, each pulse of which is generated whenever, as shaft 28 rotates, magnetic element 44 is positioned facing electromagnetic sensor 46.

Fitting shaft 28 with magnetic element 44 in no way impairs the precision of the original measuring device 10, by in no way affecting the internal mechanisms, and by being of negligible weight with respect to the other mechanical parts, of measuring device 10.

As an alternative to the Figure 3 measuring device, water consumption may also be measured using the measuring device shown in Figures 4 and 5.

The Figure 4 and 5 measuring device, indicated 10', comprises a pipe 50 of axis B, which is located along the water supply pipe (not shown), is fitted to the supply pipe by means of two threaded ring nuts (not shown), and defines internally a water flow seat 52.

Measuring device 10' also comprises a water-intercepting rotor 54 housed inside pipe 50 and fitted, in rotary manner about axis B, to a support 56 integral with pipe 50.

More specifically, rotor 54 comprises a shaft 58 of axis B, fitted idly to support 56 and in turn fitted integrally with a propeller 60 having a number of blades 62 extending radially with respect to axis B.

Like measuring device 10, rotor 54 of measuring device 10' is provided with a sensor assembly 42, as described above, to convert the rotation of shaft 58 into a pulse speed signal.

With reference to Figure 1, transducer device 40 also comprises a conditioning circuit 70, which has an input connected to the output of electromagnetic sensor 46, receives the speed signal, and generates at the output a first intermediate pulse signal obtained by conditioning the speed signal in known manner to implement the so-called antibounce function, which, as described in detail later on, provides for preventing erroneous measurement of the rotation speed of rotor 26 or 54 and, hence, the amount of water consumed, due to either an attempt to tamper with measuring device 10 or 10', or to a temporary malfunction of sensor assembly 42.

Transducer device 40 also comprises a coding circuit 72, which has an input connected to the output of conditioning circuit 70, receives the first intermediate signal, and generates at the output a second intermediate pulse signal obtained by coding the first intermediate signal according to a predetermined code criterion defined by the relationship between the rotation speed of rotor 26 or 54, expressed in a first unit of measurement, e.g. revolutions per minute, and the amount of water consumed, expressed in a second unit measurement, e.g. cubic meters.

Transducer device 40 also comprises a count circuit 74, which has an input connected to the output of coding circuit 72, receives the second intermediate signal, progressively counts the number of second intermediate signal pulses, and generates at the output the consumption signal indicating the amount of water consumed since measuring module 2 was activated.

In particular, count circuit 74 substantially comprises a commonly marketed integrated electronic count circuit, which supplies at the output a digital signal comprising a hit string defining the water consumption data.

Measuring module 2 also comprises a first storage device 76 having an input connectable to an external programming unit (not shown) by which, when measuring module 2 is installed, an operator loads storage device 76 with user data required for recording consumption, e.g. a user code; a measuring module 2 identification code; a measuring module 2 location code, etc..

Measuring module 2 also comprises a second storage device 78 having a first input connected to the output of count circuit 74, and a second input connected to an output of first storage device 76, and which provides for memorizing consumption and user data.

As stated, conditioning circuit 70 provides for preventing erroneous water consumption measurements, due to either an attempt to tamper with measuring device 10 or 10', or to a temporary malfunction of sensor assembly 42.

More specifically, a typical form of tampering to which measuring device 10 or 10' is subject is attempting to invert the normal rotation direction of rotor 26 or 54, so as to decrease the number of pulses counted by count circuit 74 and so alter the consumption data memorized in second storage device 78.

In the event of such tampering, conditioning circuit 70 operates on the speed signal in such a way that, even if rotor 26, 54 rotates in the opposite direction, the second intermediate signal supplied to count circuit 74 cannot possibly decrease the count by circuit 74.

One possible malfunction of sensor assembly 42 may be caused by electromagnetic sensor 46 generating two pulses as opposed to one as magnetic element 44 rotates past electromagnetic sensor 46, thus resulting in a miscount by count circuit 74. In which case, conditioning circuit 70 operates on the speed signal to suppress the second spurious pulse and so correct the count by circuit 74.

Measuring module 2 also comprises a connector 80 connected to an output of second storage device 78 to connect measuring module 2 to display module 8.

Display module 8 comprises a connector 82 connected to connector 80 of measuring module 2; a decoding device 84, which has an input connected to connector 82, receives the consumption and user data memorized in second storage device 78 of measuring module 2, and decodes the user and consumption data, having a first format, to generate at the output information data having a second format suitable for display; and a display unit 86, which has an input connected to the output of decoding device 84, receives the information data, and displays the information data so that the user and consumption data memorized in second storage device 78 of measuring module 2 is readable by the user and the meter reader.

Display unit 86 is a commonly marketed type, and may be mechanical, electronic or electromechanical.

Display module 8 is removable, i.e. may be disconnected from measuring module 2 by disconnecting connectors 80, 82, and may therefore be connected to measuring module 2 only when required or when requested by the user.

Interface module 4 comprises a decoding device 90, which has an input connected to the output of second storage device 78, receives the user and consumption data, and decodes the user and consumption data to generate at the output information data having a third format suitable for acquisition by portable data acquisition unit 6.

Interface module 4 also comprises a connector 92 connected to the output of decoding device 90 to connect interface module 4 to portable data acquisition unit 6, e.g. a portable computer, issued to the meter reader and equipped with appropriate data acquisition software.

Interface module 4 also comprises a drive device 94, which has an input connected to connector 92, and generates at the output a drive signal for a solenoid valve 96 in response to a control signal supplied by portable data acquisition unit 6.

More specifically, solenoid valve 96 is located along water supply pipe 12 (shown by the dot-and-dash line in Figure 1), is normally open, and, when closed, cuts off water supply to the home in which the measuring module is installed. Selective cutoff of the water supply by the meter reader is particularly useful, for example, in hazardous situations, in the event of nonpayment by the user, etc..

The electronic components of the recording system are powered by a supply device (not shown), which, depending on construction or system requirements at the time of installation, may comprise rechargeable batteries, disposable batteries, photovoltaic cells, the electric mains, or any other marketed supply device.

Operation of recording system 1 is clearly deducible from the foregoing description. In particular, sensor assembly 42 provides for converting the rotation speed of rotor 26 or 54 into an electric speed signal having a number of pulses proportional to the rotation speed of rotor 26 or 54 and, therefore, to the amount of water consumed.

After being coded as described above, the speed signal pulses are counted and memorized together with the user data.

The consumption and user data is displayed (if the user is equipped with a display module 8) and, by means of portable data acquisition unit 6 issued to the meter reader, may be acquired from second storage device 78 and stored in portable data acquisition unit 6.

The meter reader may also close or open solenoid valve 96 by means of portable data acquisition unit 6 to cut off or permit water supply.

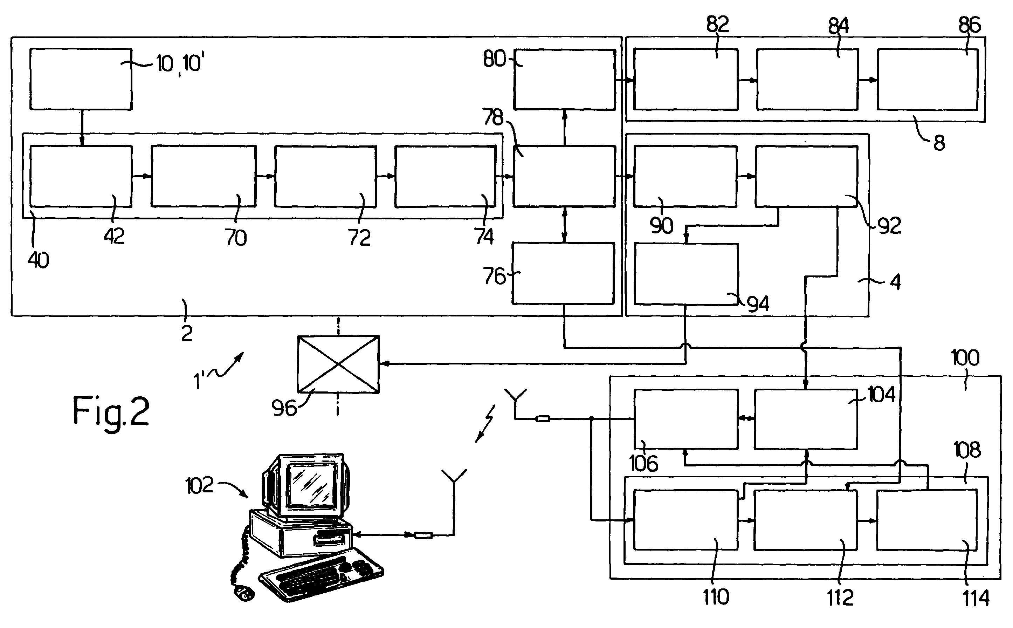

Figure 2 shows a block diagram of a second embodiment of the recording system according to the present invention, in which any identical parts are indicated using the same numbering system as in Figure 1.

As shown, the Figure 2 recording system, indicated as a whole by 1', is similar to recording system 1, but also comprises, in addition to measuring module 2, display module 8 and interface module 4, a communication module 100 for transmitting consumption and user data to, and receiving control signals from, a remote data acquisition unit 102.

Remote data acquisition unit 102 may, for example, comprise a mobile transceiver station equipped with a computer dialoguing with communication module 100 by means of an appropriate communication protocol.

Communication module 100 comprises a connector 104 for connecting communication module 100 to interface module 4; and a transmitting device 106 having an input connected to connector 104 and an output connected by connectors 104 and 92 to drive device 94 of solenoid valve 96, and which provides for transmitting consumption and user data by radio to remote data acquisition unit 102.

Alternatively, transmitting device 106 may be replaced by a cable data transmitting device.

Communication module 100 also comprises an activating device 108 for activating transmitting device 106, and which has an input connected to first storage device 76 from which it receives the user code, has an output connected to an input of transmitting device 106, and generates an activating signal for activating transmitting device 106 in response to an enabling signal, containing a second user code, sent by radio by remote data acquisition unit 102.

More specifically, activating device 108 comprises a receiving circuit 110 - in the example shown, a radio receiving circuit - supplying at a first output the user code contained in the enabling signal; a comparing circuit 112, which has a first input connected to the output of receiving circuit 110, has a second input connected via connectors 92 and 104 to first storage device 76, and compares the first user code, memorized in first storage device 76, with the second user code supplied by receiving circuit 110 in the enabling signal; and a signal generating circuit 114, which has an input connected to the output of comparing circuit 112, and generates at the output an activating signal for activating transmitting device 106 when the first and second user codes match.

For example, comparing circuit 112 generates at the output a logic state signal indicating the outcome of the comparison, and which assumes a first logic level when the first and second user codes match, and a second logic level when the first and second user codes do not match. In which case, signal generating circuit 114 generates the activating signal for activating transmitting device 106 when the state signal assumes the first logic level.

Alternatively, activating device 108 may generate the activating signal for activating transmitting device 106 at predetermined time intervals.

In this embodiment, the input of drive device 94 is connected via connectors 92 and 104 to a second output of receiving circuit 110, at which receiving circuit 110 supplies the control signal sent by remote data acquisition unit 102 to drive solenoid valve 96.

Communication module 100 is removable, i.e. may be disconnected from interface module 4 by disconnecting connectors 104 and 92, and may therefore be connected to interface module 4 when consumption and user data is transmitted more conveniently by radio as opposed to being acquired by means of portable data acquisition unit 6, e.g. in the case of a home not easily reached by the meter reader.

Recording system 1' operates in substantially the same way as recording system 1, except that the consumption and user data memorized in second storage device 78 is transmitted over radio at predetermined time intervals or in response to an enabling signal sent by radio by remote data acquisition unit 102.

As communication module 100 is removable, consumption and user data may obviously also be accessed using portable data acquisition unit 6 issued to the meter reader, i.e. by disconnecting connector 104 of communication module 100 from connector 92 of interface module 4, and connecting portable data acquisition unit 6 to connector 92.

Similarly, solenoid valve 96 is also controlled by radio by remote data acquisition unit 102.

The advantages of recording systems 1 and 1' according to the present invention are as follows.

In particular, they are straightforward, easy to install at any point along the water or gas supply pipe, and provide for fast, reliable consumption readings with none of the human errors typically associated with the conventional recording system, and with no possibility of tampering, by virtue of consumption data being either acquired by means of portable data acquisition unit 6 or transmitted by radio or cable directly to remote data acquisition unit 102.

Recording systems 1, 1' are extremely versatile by being connectable to any portable data acquisition unit 6 with the appropriate acquisition software.

The recording systems require no dedicated auxiliary systems of any sort, such as telephone, electrical, mechanical, fluid pressure reducing systems, etc..

Recording systems 1, 1' are cheap to produce by comprising a small number of commonly marketed mechanical and electronic components which are cheap to assemble.

Recording systems 1, 1' are easy to repair or replace in the event of a breakdown, and are cheap to maintain.

The recording systems may be powered by any type of electrical supply, depending on construction or system requirements at the time of installation.

The recording systems enable water or gas supply to be controlled by the water or gas board by means of the portable data acquisition unit issued to the meter reader, or by means of remote data acquisition unit 102.

Finally, recording system 1' also provides for remote monitoring by simply programming activating device 108 or remote data acquisition unit 102 to transmit data (consumption, instantaneous flow rate, by equipping the system with a pressure sensor) at predetermined time intervals. Timing of the transmission intervals may be remote programmed with no manual intervention required, which means recording systems may also be installed in out-of-the-way locations with no electrical mains supply, by virtue of the supply batteries being rechargeable from a panel of photovoltaic cells.

Clearly, changes may be made to the recording systems as described and illustrated herein without, however, departing from the scope of the present invention.

For example, as opposed to being removable, display module 8 of recording systems 1 and 1' may be integrated with measuring module 2, in which case, respective connectors 82 and 80 of display module 8 and measuring module 2 are dispensed with.

Similarly, as opposed to being removable, communication module 100 of recording system 1' may be integrated with interface module 4, in which case, respective connectors 104 and 92 of communication module 100 and interface module 4 are dispensed with.

When recording water and gas consumption in multiple-user premises, in which each user is equipped with gas and water consumption recording systems (or the building is equipped with a single water consumption recording system), communication module 100 and remote data acquisition unit 102 are shared by all the users, so that interface modules 4 are all connected to a single communication module activated, for example, by a single code for the whole building.

In recording system 1', transmitting device 106 and receiving device 110 may be replaced by a single transceiving device; and transducer device 40 (and therefore conditioning circuit 70, coding circuit 72 and count circuit 74), first and second storage devices 76 and 78, drive device 94, decoding devices 84 and 90, comparing circuit 112 and signal generating circuit 114 may be software- as opposed to hardware-implemented using a microprocessor.

Also, connectors 82 and 92 of display module 8 and interface module 4 may be replaced by a single connector.

## Claims

1. A recording system for recording consumption of a fluid, comprising:
- consumption measuring means (10; 10') in turn comprising a seat (24; 52) for the passage of said fluid, and an intercepting member (26; 54) for intercepting the fluid, and which is located in said seat (24; 52) and movable by the passage of said fluid;
characterized by also comprising:
- transducer means (40) connected to said consumption measuring means (10; 10') to convert a movement of said intercepting member (26; 54) into an electric consumption signal; and
- acquisition means (4, 6; 4, 100, 102) for acquiring said consumption signal.

2. A recording system as claimed in Claim 1, characterized in that said intercepting member (26; 54) is mounted for rotation about and axis (A; B) inside said seat (24; 52); and in that said transducer means (40) comprise:
- sensor means (42) connected to said intercepting member (26; 54) to generate a pulse speed signal correlated to the rotation speed of said intercepting member (26; 54).

3. A recording system as claimed in Claim 2, characterized in that said transducer means (40) also comprise:
- pulse counting means (74) connected to said sensor means (42); the number of pulses counted defining said consumption signal and representing fluid consumption data.

4. A recording system as claimed in Claim 3, characterized in that said transducer means (40) also comprise:
- coding means (72) interposed between said sensor means (42) and said counting means (74) to code said speed signal according to a predetermined code criterion defined by the relationship between the rotation speed of said intercepting member (26; 54), expressed in a first unit of measurement, and the consumption of said fluid, expressed in a second unit of measurement.

5. A recording system as claimed in Claim 4, characterized in that said transducer means (40) also comprise:
- conditioning means (70) interposed between said sensor means (42) and said coding means (72) to implement an antibounce function for preventing said consumption data from being altered as a result of an attempt to tamper with said consumption measuring means (10; 10') or as a result of a malfunction of said sensor means (42).

6. A recording system as claimed in any one of the foregoing Claims from 3 to 5, characterized by also comprising:
- first storage means (76) for storing user data; and
- second storage means (78) connected to said counting means (74) and to said first storage means (76) to store said consumption data and said user data.

7. A recording system as claimed in Claim 6, characterized in that said acquisition means (6) comprise:
- a portable data acquisition unit (6) connectable to said second storage means (78).

8. A recording system as claimed in Claim 7, characterized by also comprising:
- first decoding means (90) interposed between said second storage means (78) and said portable data acquisition unit (6) to convert said consumption data and said user data, having a first format, into first information data having a second format.

9. A recording system as claimed in Claim 7 or 8, characterized by also comprising:
- first drive means (94) for driving a first solenoid valve (96) located along a supply pipe (12) supplying said fluid, and which are connectable to said portable data acquisition unit (6) and generate a drive signal for closing/opening said first solenoid valve (96) in response to a control signal generated by the portable data acquisition unit (6).

10. A recording system as claimed in Claim 6, characterized in that said acquisition means (100, 102) comprise:
- a remote data acquisition unit (102); and
- transmitting means (106) connected to said second storage means (78) to transmit said consumption data and said user data to said remote data acquisition unit (102).

11. A recording system as claimed in Claim 10, characterized by also comprising:
- second decoding means (90) interposed between said second storage means (78) and said transmitting means (106) to convert said consumption data and said user data, having a third format, into second information data having a fourth format.

12. A recording system as claimed in Claim 10 or 11, characterized by also comprising:
- first activating means (108) for activating said transmitting means (106) in response to an enabling signal sent by said remote data acquisition unit (102).

13. A recording system as claimed in Claim 12, characterized in that said user data stored in said first storage means (76) comprises at least a first user code; in that said enabling signal sent by said remote data acquisition unit (102) comprises at least a second user code; and in that said first activating means (108) comprise:
- receiving means (110) for receiving said enabling signal and supplying said second user code;
- comparing means (112) connected to said receiving means (110) and to said first storage means (76) to compare said first and said second user code; and
- signal generating means (114) connected to said comparing means (112) and generating an activating signal for activating said transmitting means (106) when said first and said second user code match.

14. A recording system as claimed in Claim 10 or 11, characterized by also comprising:
- second activating means (108) for activating said transmitting means (106) at predetermined time intervals.

15. A recording system as claimed in any one of the foregoing Claims from 10 to 14, characterized by also comprising:
- second drive means (94) for driving a second solenoid valve (96) located along a supply pipe (12) supplying said fluid, and which generate a drive signal for closing/opening said second solenoid valve (96) in response to a control signal sent by said remote data acquisition unit (102).

16. A recording system as claimed in any one of the foregoing Claims from 6 to 14, characterized by also comprising:
- display means (8) connectable to said second storage means (78) to display said consumption data and said user data.

17. A recording system as claimed in Claim 16, characterized in that said display means (8) comprise:
- a display unit (86) for displaying said consumption data and said user data; and
- third decoding means (84) interposed between said second storage means (78) and said display unit (86) to convert said consumption data and said user data, having a fifth format, into third information data having a sixth format.

18. A recording system as claimed in any one of the foregoing Claims from 2 to 17, characterized in that said sensor means (42) are magnetic.

19. A recording system as claimed in Claim 18, characterized in that said sensor means (42) comprise:
- a magnetic element (44) integral with said intercepting member (26; 54); and
- an electromagnetic sensor (46) cooperating with said magnetic element (44) to generate said speed signal; said speed signal having one pulse whenever said magnetic element (44) is positioned facing said electromagnetic sensor (46) as said intercepting member (26; 54) rotates.
